# FASCICULE DE BREVET EUROPEEN

(11) **EP 3 157 975 B1**
(45) Date de publication et mention de la délivrance du brevet: **06.06.2018**
(21) Numéro de dépôt: 15729825.8
(22) Date de dépôt: 16.06.2015
(51) Int. Cl.: C08G 59/02, C08L 15/00, C08G 59/42, C08G 59/50

(54) **COMPOSITION DE CAOUTCHOUC COMPRENANT UN ELASTOMERE EPOXYDE RETICULE PAR UN POLY-ACIDE CARBOXYLIQUE**
KAUTSCHUKZUSAMMENSETZUNG MIT EINEM DURCH EINE POLYCARBONSÄURE VERNETZTEN EPOXIDELASTOMER
RUBBER COMPOSITION COMPRISING AN EPOXIDE ELASTOMER CROSS-LINKED BY A POLYCARBOXYLIC ACID

(30) Priorité: 18.06.2014 FR 1455609
(43) Date de publication de la demande: 26.04.2017
(73) Titulaire: Compagnie Générale des Etablissements Michelin, 63000 Clermont-Ferrand (FR)
(72) Inventeur: SCHNELL, Benoit, F-63040 Clermont-Ferrand Cedex 9 (FR); FLEURY, Etienne, F-63040 Clermont Ferrand Cedex 9 (FR)
(74) Mandataire: Sidhu, Alban
(86) Numéro de dépôt international: PCT/EP2015/063473
(87) Numéro de publication internationale: WO 2015/193312

(56) Documents cités:
- EP-A1- 2 447 318
- FR-A1- 2 567 899
- JP-A- 2004 359 773
- MYRIAM PIRE ET AL: "Imidazole-accelerated crosslinking of epoxidzed natural rubber by dicarboxylic acids: a mechanistic investigation using NMR spectrospcopy", POLYMER CHEMISTRY, ROYAL SOCIETY OF CHEMISTRY, GB, vol. 3, no. 4, 1 janvier 2012 (2012-01-01) , pages 946-953, XP002716750, ISSN: 1759-9954, DOI: 10.1039/C2PY00591C [extrait le 2012-01-31]

## Description

La présente invention est relative aux compositions de caoutchouc, en particulier de compositions de caoutchouc à base d'élastomères comprenant des fonctions époxydes.

Il est connu, et habituel depuis de très nombreuses années, d'utiliser dans des pneumatiques des compositions de caoutchouc dont la matrice élastomérique est réticulée au soufre, cette réticulation est alors nommée vulcanisation. Le système de vulcanisation classique combine du soufre moléculaire et au moins un accélérateur de vulcanisation. Cependant, il est connu qu'un tel système pénalise la mise en oeuvre de la composition avant cuisson par le phénomène du grillage. On rappelle que le phénomène dit de "grillage" conduit rapidement, au cours de la préparation des compositions de caoutchouc, à des vulcanisations prématurées (*"scorching"*), à des viscosités à l'état cru très élevées, en fin de compte à des compositions de caoutchouc quasiment impossibles à travailler et à mettre en oeuvre industriellement.

Par conséquent, les systèmes de vulcanisation ont été perfectionnés au fil des années, en association avec les procédés de préparation des compositions de caoutchouc afin de maitriser les inconvénients évoqués ci-dessus. Ainsi, les compositions sont souvent complexes et comprennent en plus du soufre moléculaire, ou d'un agent donneur de soufre moléculaire, des accélérateurs de vulcanisation, des activateurs, et éventuellement des retardateurs de vulcanisation. A présent, il serait intéressant pour les manufacturiers de trouver des systèmes de réticulation aussi performants que la vulcanisation, tout en simplifiant les compositions et leur préparation.

L'article de Myriam Pire et Al.: "Imidazole-accelerated crosslinking of epoxidized natural rubber by dicarboxylic acids: a mechanistic investigation using NMR spectrospcopy", Polymer Chemistry, Royal Society of Chemistry, GB, vol. 3, no. 4, 1 janvier 2012 (2012-01-01), pages 946-953 divulgue un système de vulcanisation pour caoutchouc naturel époxydé à base de diacide carboxylique et d'imidazole.

FR2567899 divulgue un système de vulcanisation à base d'acide polycarboxylique et de sel d'ammonium quaternaire ou de sel de phosphonium quaternaire.

Poursuivant leurs recherches, les demanderesses ont précédemment trouvé que des compositions pour pneumatiques particulières, réticulées par un poly-acide carboxylique pouvaient être simplifiées par rapport aux compositions classiques, et que ces compositions pouvaient présenter des propriétés améliorées. A présent, les demanderesses ont trouvé que l'utilisation d'un agent de recouvrement de silice associé à une composition dans laquelle la silice est majoritaire, permet d'améliorer les propriétés de rupture de ces compositions.

En conséquence, un premier objet de l'invention concerne une composition de caoutchouc à base d'au moins un élastomère majoritaire comprenant des fonctions époxydes, de la silice comme charge renforçante majoritaire, un agent de recouvrement de la silice, et un système de réticulation dudit élastomère comprenant un poly-acide carboxylique de formule générale (I) 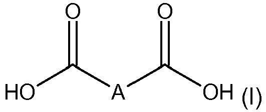 dans laquelle A représente une liaison covalente ou un groupement hydrocarboné comportant au moins 1 atome de carbone, éventuellement substitué et éventuellement interrompu par un ou plusieurs hétéroatomes, et un imidazole de formule générale (II) 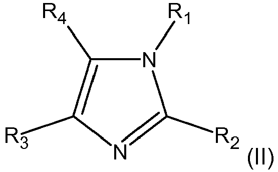 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble, avec les atomes de carbone du cycle imidazole auxquels ils se rattachent, un cycle.

Préférentiellement, l'invention a pour objet une composition telle que définie ci-dessus dans laquelle l'élastomère diénique majoritaire comprenant des fonctions époxydes représente de 30 à 100 pce, préférentiellement de 50 à 100 pce, en coupage avec 0 à 70 pce, de préférence de 0 à 50 pce, d'un ou plusieurs élastomères non époxydés minoritaires. De préférence, l'élastomère diénique majoritaire comprenant des fonctions époxydes, représente la totalité des 100 pce d'élastomère. Préférentiellement, l'élastomère majoritaire comprenant des fonctions époxydes présente un taux molaire d'époxydation compris dans un domaine allant de 0,1% à 80%, préférentiellement dans un domaine de 0,1% à 50%, plus préférentiellement dans un domaine de 0,3% à 50%. De préférence encore, l'élastomère majoritaire comprenant des fonctions époxydes est choisi dans le groupe constitué par les élastomères diéniques époxydés, les élastomères oléfiniques époxydés et les mélanges de ces derniers. Selon un premier mode de réalisation, préférentiel, l'élastomère majoritaire comprenant des fonctions époxydes est un élastomère diénique époxydé, et préférentiellement un élastomère diénique époxydé choisi dans le groupe constitué par les caoutchoucs naturels époxydés, les polyisoprènes de synthèse époxydés, les polybutadiènes époxydés, les copolymères de butadiène-styrène époxydés et les mélanges de ces derniers. Selon un autre mode de réalisation, également préférentiel, l'élastomère majoritaire comprenant des fonctions époxydes est un élastomère oléfinique comprenant des fonctions époxydes, comprenant de préférence des fonctions époxydes comprend entre 50 et 95%, plus préférentiellement entre 65 et 85% d'oléfine (pourcentages molaires). De préférence, l'élastomère oléfinique comprenant des fonctions époxydes est un élastomère éthylénique époxydé.

Préférentiellement également, l'invention concerne une composition telle que définie ci-dessus dans laquelle A représente une liaison covalente ou un groupement divalent hydrocarboné comportant de 1 à 1800 atomes de carbone, de préférence de 2 à 300 atomes de carbone, plus préférentiellement de 2 à 100 atomes de carbone, mieux, de 2 à 65 atomes de carbone. De préférence, A est un groupement divalent de type aliphatique, ou aromatique ou un groupement comportant au moins une partie aliphatique et une partie aromatique. Plus préférentiellement, A est un groupement divalent de type aliphatique, ou un groupement comportant au moins une partie aliphatique et une partie aromatique, et plus préférentiellement encore, A est un groupement divalent de type aliphatique saturé ou insaturé ; de manière très préférentielle A est un groupement alkylène. De préférence, A est interrompu par au moins un hétéroatome choisi parmi l'oxygène, l'azote et le soufre, de préférence l'oxygène. De préférence également, A est substitué par au moins un radical choisi parmi les radicaux alkyle, cycloalkylalkyle, aryle, aralkyle, hydroxyle, alkoxy, amino et carbonyle. Préférentiellement A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-mêmes substitués par une ou plusieurs fonctions acides carboxyliques. Alternativement et préférentiellement également, A ne comporte pas d'autre fonction acide carboxylique. De préférence, le taux de poly-acide est compris dans un domaine allant de 0,2 à 100 pce, de préférence de 0,2 à 50 pce.

De préférence, l'invention concerne une composition telle que définie ci-dessus dans laquelle,
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Plus préférentiellement, l'invention concerne une composition telle que définie ci-dessus dans laquelle R₁ représente un groupement choisis parmi les groupements alkyles ayant de 2 à 12 atomes de carbone, ou aralkyles ayant de 7 à 13 atomes de carbone; groupements qui peuvent éventuellement être substitués. Préférentiellement, R₁ représente un groupement aralkyle ayant de 7 à 13 atomes de carbone éventuellement substitué et R₂ représente un groupement alkyle ayant de 1 à 12 atomes de carbone. De manière préférentielle, R₁ représente un groupement aralkyle ayant de 7 à 9 atomes de carbone éventuellement substitué et R₂ représente un groupement alkyle ayant de 1 à 4 atomes de carbone. De manière plus préférentielle, R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués, ou encore, R₃ et R₄ forment avec les atomes de carbone du cycle imidazole auxquels ils se rattachent, un cycle phényle, cyclohexene, ou cyclopentene.

De préférence, l'invention concerne une composition telle que définie ci-dessus dans laquelle le taux d'imidazole est compris dans un domaine allant de 0,01 à 4 équivalents molaires, et de préférence de 0,01 à 3 équivalents molaires, par rapport aux fonctions acides carboxyliques présentes sur le poly-acide carboxylique de formule générale (I).

De manière préférentielle, l'invention concerne une composition telle que définie ci-dessus dans laquelle le taux total de charge renforçante est compris dans un domaine allant de 5 à 200 pce. De préférence, le taux de silice est compris dans un domaine allant de 5 à 200 pce, de préférence de 10 à 150 pce. Préférentiellement, la charge renforçante comporte du noir de carbone à titre minoritaire de préférence à un taux compris dans un domaine allant de 0,1 à 100 pce, de préférence de 0,1 à 30 pce. Alternativement et préférentiellement également, la silice représente la totalité de la charge renforçante.

De préférence, l'invention concerne une composition telle que définie ci-dessus dans laquelle l'agent de recouvrement de la silice est choisi dans le groupe constitué par les silanes hydroxylés ou hydrolysables, les polyols, les polyéthers, les aminés, les polysiloxanes hydroxylés ou hydrolysables, les dérivés guanidiques, les hydroxydes de métaux alcalins ou alcalino-terreux et les mélanges de tels composés. Préférentiellement, l'agent de recouvrement de la silice est choisi dans le groupe constitué par les aminés, les dérivés guanidiques, les hydroxydes de métaux alcalins ou alcalino-terreux et les mélanges de tels composés ; plus préférentiellement, dans le groupe constitué par les amines primaires, les dérivés guanidiques, les hydroxydes de métaux alcalins ou alcalino-terreux et les mélanges de tels composés. Très préférentiellement, l'agent de recouvrement de la silice est la diphénylguanidine ou l'octadécylamine, plus particulièrement la diphénylguanidine. De préférence, l'agent de recouvrement de la silice est présent à un taux compris dans un domaine allant de 0,5 à 30 pce, de préférence de 1 à 15 pce.

L'invention concerne également un pneumatique comprenant une composition telle que définie ci-dessus, de préférence comme composition de bande de roulement.

### I. Tests

Les compositions de caoutchouc sont caractérisées après cuisson, comme indiqué ci-après.

### Essais de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en seconde élongation (i.e., après un cycle d'accommodation au taux d'extension prévu pour la mesure elle-même) le module sécant nominal (ou contrainte apparente, en MPa) à 10% ou 50% d'allongement (notés respectivement MSA10 ou MSA50). Les mesures de traction pour déterminer les contraintes à la rupture (en MPa) et les allongements à la rupture (en %) et les modules accommodés sécants sont effectuées une température donnée (usuellement 23°C ou 40°C +/- 2°C), et dans les conditions normales d'hygrométrie (50 +/- 5% d'humidité relative). Ces valeurs peuvent être converties en base 100 pour une comparaison facilitée des résultats.

### II. Composition de l'invention

La composition selon l'invention est une composition de caoutchouc à base d'au moins un élastomère majoritaire comprenant des fonctions époxydes, au moins une charge renforçante, et un système de réticulation dudit polymère comprenant un poly-acide carboxylique spécifique de formule générale (I) et un imidazole de formule générale (II).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression "équivalent molaire", bien connue de l'homme du métier, il faut entendre le quotient entre le nombre de moles du composé concerné et le nombre de moles du composé de référence. Ainsi, 2 équivalents d'un composé B par rapport à un composé A représentent 2 moles du composé B lorsqu'1 mole du composé A est utilisée.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères.

Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1. Elastomère comprenant des fonctions époxydes (ou élastomère époxydé)

Par élastomère ou caoutchouc (les deux termes étant de manière connue synonymes et interchangeables) comprenant des fonctions époxydes, on entend tout type d'élastomère au sens connu de l'homme de l'art, qu'il s'agisse d'un homopolymère ou d'un copolymère à bloc, statistique ou autre, ayant des propriétés élastomériques, fonctionnalisé époxyde (ou époxydé), c'est-à-dire porteur de groupes fonctionnels époxydes.

Le taux (% molaire) d'époxydation des élastomères époxydés peut varier dans une large part selon les modes de réalisation particuliers de l'invention, de préférence dans un domaine de 0,1% à 80%, préférentiellement dans un domaine de 0,1% à 50%, plus préférentiellement dans un domaine de 0,3% à 50%. Quand le taux d'époxydation est inférieur à 0,1%, l'effet technique visé risque d'être insuffisant tandis qu'au-delà de 80%, les propriétés intrinsèques du polymère sont dégradées. Pour toutes ces raisons, le taux de fonctionnalisation, notamment d'époxydation, est plus préférentiellement compris dans un domaine de 0,3% à 30%, mieux, compris dans un domaine de 0,3% à 20%.

Les élastomères époxydés sont, de manière connue, solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient.

La Tg des élastomères décrits ci-dessous est mesurée de manière connue par DSC (Differential Scanning Calorimetry), par exemple et sauf indications différentes spécifiées dans la présente demande, selon la norme ASTM D3418 de 1999.

L'élastomère époxydé peut être choisi dans le groupe constitué par les élastomères diéniques époxydés, les élastomères oléfiniques époxydés et les mélanges de ces derniers. Préférentiellement, l'élastomère époxydé est choisi parmi les élastomères oléfiniques époxydés et les mélanges de ces derniers. Selon une autre variante préférentielle de l'invention, l'élastomère époxydé est choisi parmi les élastomères diéniques époxydés et les mélanges de ces derniers.

Par élastomère du type diénique époxydé, on rappelle que doit être entendu un élastomère qui est issu au moins en partie (i.e. un homopolymère ou un copolymère) de monomères diènes (monomères porteurs de deux doubles liaisons carbone-carbone, conjuguées ou non), ce polymère étant fonctionnalisé, c'est-à-dire qu'il est porteur de groupes fonctionnels époxydes.

Une première caractéristique des élastomères diéniques époxydés, est donc d'être des élastomères diéniques. Ces élastomères diéniques, par définition non thermoplastiques dans la présente demande, présentant une Tg dans la très grande majorité des cas qui est négative (c'est-à-dire inférieure à 0°C), peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à - 80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans - 1,4 de la partie isoprénique comprise entre 10% et 50%, et plus généralement tout copolymère butadiène-styrène-isoprène ayant une Tg comprise entre -20°C et -70°C.

Une deuxième caractéristique essentielle de l'élastomère diénique époxydé utile aux besoins de l'invention, est qu'il est fonctionnalisé, porteur de groupes fonctionnels époxydes.

Les fonctions époxydes présentes dans l'élastomère diénique sont obtenues par copolymérisation ou par modification post-polymérisation, et seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

Les élastomères diéniques époxydés peuvent par exemple être obtenus de manière connue par époxydation de l'élastomère diénique non époxydé équivalent, par exemple par des procédés à base de chlorohydrine ou de bromohydrine ou des procédés à base de peroxydes d'hydrogène, d'alkyl hydroperoxydes ou de peracides (tel que acide peracétique ou acide performique), voir notamment Kautsch. Gummi Kunstst. 2004, 57(3), 82. Les fonctions époxydes sont alors dans la chaîne de polymère. On peut citer notamment les caoutchoucs naturels époxydés (en abrégé "ENR") ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être préparés par des techniques d'époxydation bien connues de l'homme du métier.

De tels élastomères diéniques époxydés et leurs procédés d'obtention sont bien connus de l'homme du métier et disponibles commercialement. Des élastomères diéniques porteurs de groupes époxydes ont été décrits par exemple dans US 2003/120007 ou EP 0763564, US 6903165 ou EP 1403287.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

Les élastomères diéniques époxydés peuvent également présenter des fonctions époxydes pendantes. Dans ce cas, ils peuvent être obtenus soit par modification post-polymérisation (voir par exemple J. Appl. Polym. Sci. 1999, 73, 1733) ; ou par copolymérisation radicalaire des monomères diéniques avec des monomères porteurs de fonctions époxydes, notamment les esters de l'acide méthacrylique comportant des fonctions époxydes, comme par exemple le méthacrylate de glycidyle (cette polymérisation radicalaire, notamment en masse, en solution ou en milieu dispersé - notamment dispersion, émulsion ou suspension- est bien connue de l'homme du métier de la synthèse de polymères, citons par exemple la référence suivante : Macromolécules 1998, 31, 2822). Par exemple, le document US20110098404 décrit la copolymérisation en émulsion du 1,3-butadiène, du styrène et du méthacrylate de glycidyle.

Le taux (% molaire) d'époxydation des élastomères diéniques époxydés précédemment décrits peut varier dans une large part selon les modes de réalisation particuliers de l'invention, de préférence dans un domaine de 0,1% à 80%, préférentiellement dans un domaine de 0,1% à 50%, plus préférentiellement dans un domaine de 0,3% à 50%. Quand le taux d'époxydation est inférieur à 0,1%, l'effet technique visé risque d'être insuffisant tandis qu'au-delà de 80%, les propriétés intrinsèques du polymère sont dégradées. Pour toutes ces raisons, le taux de fonctionnalisation, notamment d'époxydation, est plus préférentiellement compris dans un domaine de 0,3% à 30%.

Par élastomère du type oléfinique époxydé, on rappelle que doit être entendu un élastomère fonctionnalisé époxyde, c'est-à-dire qu'il est porteur de groupes fonctionnels époxydes, et dont la chaine élastomérique est une chaine carbonée comportant majoritairement des unités monomériques oléfine notés O (taux molaire supérieur à 50%). Plus précisément, le taux molaire de O est compris entre 50 et 95%, préférentiellement entre 65 et 85% Cet élastomère oléfinique est donc un copolymère comportant également 5 à 50% molaire de motifs non oléfiniques, c'est-à-dire différents de O). Ces motifs non oléfiniques sont constitués en partie ou en totalité par des motifs porteurs des groupes fonctionnels époxydes, notés R, nécessaires aux besoins de l'invention. Dans le cas où les motifs non oléfiniques ne sont pas intégralement des motifs R, d'autres motifs, notés A' sont présents dans la chaine carbonée de telle manière que le taux molaire de R+A' est strictement inférieur à 50%.

Les monomères O peuvent provenir de toute oléfine connue par l'homme de l'art, comme par exemple, l'éthylène, le propylène, le butylène, l'isobutylène, ces monomères étant éventuellement substitués par des groupes alkyles linéaires ou ramifiés.

Préférentiellement O est un motif éthylène [-CH2-CH2-], et dans ce cas préférentiel, l'élastomère oléfinique époxydé est un élastomère éthylénique époxydé, ce qui permet d'améliorer encore plus le compromis entre les performances de rigidité et d'hystérèse dans les compositions pour pneumatique.

Une caractéristique essentielle de l'élastomère oléfinique époxydé utile aux besoins de l'invention, est qu'il est fonctionnalisé, porteur de groupes fonctionnels époxydes.

La fonction époxyde peut être portée directement par le squelette carboné, et est alors principalement obtenue par époxydation de doubles liaisons carbone-carbone initialement présentes après copolymérisation. Cette époxydation de polymères insaturés est bien connue de l'homme du métier, et peut se faire par exemple par des procédés à base de chlorohydrine ou de bromohydrine, des procédés d'oxydation directe ou des procédés à base de peroxydes d'hydrogène, d'alkyl hydropéroxydes ou de peracides (tels que l'acide peracétique ou acide performique).

La fonction époxyde peut également être pendante et est alors soit déjà présente dans un monomère intervenant dans la copolymérisation avec l'oléfine (ce monomère peut être, par exemple, le méthacrylate de glycidyle, l'allylglycidyléther ou le vinylglycidyléther), soit obtenue par la modification post-copolymérisation d'une fonction pendante.

Le taux (% molaire) de motif R des élastomères oléfiniques époxydés précédemment décrits peut varier dans une large part selon les modes de réalisation particuliers de l'invention, de préférence dans un domaine de 0,1% à 50%, préférentiellement dans un domaine de 0,3% à 50%, plus préférentiellement dans un domaine de 0,3% à 30%, mieux, dans un domaine de 0,3 à 20%. Quand le taux de motifs R est inférieur à 0,1%, l'effet technique visé risque d'être insuffisant tandis qu'au-delà de 50%, l'élastomère ne serait plus majoritairement oléfinique.

Lorsque les motifs non oléfiniques ne sont pas constitués en totalité par des motifs R porteurs de fonction époxyde, d'autres motifs non oléfiniques A' sont présents dans la chaine, de façon à ce que le taux molaire total représenté par les monomères O, R et A' soit égal à 100%. Les monomères non oléfiniques utiles à la préparation des élastomères oléfiniques époxydés peuvent être choisis parmi les monomères non oléfiniques ne conduisant pas à des insaturations et les monomères qui une fois polymérisés conduisent à des insaturations portées par la chaine élastomère (autres que des monomères diéniques).

Les monomères non oléfiniques ne conduisant pas à des insaturations sont essentiellement des monomères vinyliques et acryliques/méthacryliques. Par exemple, de tels monomères peuvent être choisis parmi le styrène, le vinyle acétate, l'alcool vinylique, l'acrylonitrile, l'acrylate de méthyle, le méthacrylate de méthyle, ces monomères étant éventuellement substitués par des groupes alkyles, aryles ou d'autres groupes fonctionnalisés.

Par exemple également, les monomères non diéniques utiles à la préparation des élastomères de type oléfiniques porteurs d'insaturations par copolymérisation sont tous ceux connus de l'homme de l'art pour former des élastomères insaturés, tels que par exemple le méthacrylate de dicyclopentadiényloxyéthyle.

Les élastomères oléfiniques époxydés présentent une Tg dans la très grande majorité des cas qui est négative (c'est-à-dire inférieure à 0°C).

Les élastomères oléfiniques époxydés présentent une masse molaire moyenne en nombre (Mn) d'au moins 10 000 g/mol, préférentiellement d'au moins 15 000 g/mol et d'au plus 1 500 000 g/mol. L'indice de polydispersité Ip, égal à Mw/Mn (Mw étant la masse molaire moyenne en poids), est compris entre 1,05 et 11,00.

De préférence, et en résumé, l'élastomère oléfinique comprenant des fonctions époxydes est donc un copolymère possédant au moins 50% (en moles) d'unités monomériques oléfine, et avec un nombre d'unités monomériques différentes supérieur ou égal à 2, préférentiellement de 2 à 5, et plus préférentiellement de 2 ou 3. Ce copolymère pourra être obtenu par copolymérisation ou par modification post-polymérisation d'un élastomère. Les fonctions époxydes présentes dans le copolymère oléfinique, obtenu par copolymérisation ou par modification post-polymérisation, seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

Des élastomères oléfiniques époxydés et leurs procédés d'obtention sont bien connus de l'homme du métier et disponibles commercialement. Des élastomères oléfiniques porteurs de groupes époxydes ont été décrits par exemple dans les documents EP 0247580 ou US 5576080. Egalement, la société Arkema propose dans le commerce, des polyéthylènes époxydés sous les dénominations commerciales « Lotader AX8840» et « Lotader AX8900 ».

Les compositions de l'invention peuvent contenir un seul élastomère époxydé ou un mélange de plusieurs élastomères époxydés (qu'on notera alors au singulier comme étant « l'élastomère époxydé » pour représenter la somme des élastomères époxydés de la composition).

L'élastomère époxydé est majoritaire dans la composition de caoutchouc de l'invention, c'est-à-dire qu'il est soit le seul élastomère, soit il est celui qui représente la plus grande masse, parmi les élastomères de la composition.

Selon un mode préférentiel de réalisation de l'invention, la composition de caoutchouc comprend par exemple de 30 à 100 pce, en particulier de 50 à 100 pce, de préférence 70 à 100 pce, d'élastomère époxydé majoritaire en coupage avec 0 à 70 pce, en particulier de 0 à 50 pce et de préférence 0 à 30 pce, d'un ou plusieurs autres élastomères, minoritaires, non époxydés.

Selon un autre mode préférentiel de réalisation de l'invention, la composition comporte pour la totalité des 100 pce d'élastomère, un ou plusieurs élastomères époxydés.

### II.2. Charge renforçante

La composition de caoutchouc selon l'invention comprend de la silice comme charge renforçante majoritaire. En complément, d'autres charges renforçantes peuvent être utilisées, telles que le noir de carbone.

L'état physique sous lequel se présente la silice est indifférent, que ce soit sous forme de poudre, de microperles, de granulés, de billes ou toute autre forme densifiée appropriée. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837. La silice, a de préférence une surface BET comprise entre 45 et 400 m²/g, plus préférentiellement comprise entre 60 et 300 m²/g.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

De manière préférentielle, le taux de charge renforçante totale (silice et optionnellement noir de carbone et/ou autre charge renforçante) est compris dans un domaine allant de 5 à 200 pce, plus préférentiellement de 10 à 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que poids lourd.

De préférence, on utilise la silice, toujours majoritaire, à un taux allant de 5 à 200 pce, plus préférentiellement de 10 à 150 pce ; et optionnellement du noir de carbone. Le noir de carbone, lorsqu'il est présent, est utilisé de préférence à un taux inférieur à 100 pce, plus préférentiellement compris dans un domaine allant de 0,1 à 100 pce, plus préférentiellement de 0,1 à 30 pce, notamment de 0,1 à 10 pce, mieux de 0,1 à 5 pce.

Pour coupler la charge inorganique renforçante à l'élastomère, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Dans les compositions de l'invention, la teneur en agent de couplage est préférentiellement comprise dans un domaine allant de 0 à 20 pce, plus préférentiellement de 0 à 16 pce et encore plus préférentiellement de 0 à 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### 11.3. Agent de recouvrement de la silice

La composition de l'invention comprend au moins un agent de recouvrement de la silice, tel que les agents connus de l'homme de l'art. Préférentiellement, l'agent de recouvrement de la silice est choisi dans le groupe constitué par les silanes hydroxylés ou hydrolysables, les polyols, les polyéthers, les aminés, les polysiloxanes hydroxylés ou hydrolysables, les dérivés guanidiques, les hydroxydes de métaux alcalins ou alcalino-terreux et les mélanges de tels composés ; plus préférentiellement, dans le groupe constitué par les aminés, les dérivés guanidiques, les hydroxydes de métaux alcalins ou alcalino-terreux et les mélanges de tels composés ; de manière préférentielle, dans le groupe constitué par les amines primaires, les dérivés guanidiques, les hydroxydes de métaux alcalins ou alcalino-terreux et les mélanges de tels composés ; et de manière très préférentielle, l'agent de recouvrement de la silice est la diphénylguanidine ou l'octadécylamine, plus particulièrement la diphénylguanidine.

De préférence, l'agent de recouvrement de la silice est présent à un taux compris dans un domaine allant de 0,5 à 30 pce, de préférence de 1 à 15 pce.

### II.4. Système de réticulation du polymère époxydé

Au polymère époxydé et à la charge renforçante précédemment décrits est associé un système de réticulation, apte à la réticuler ou durcir la composition de l'invention. Ce système de réticulation comprend un (c'est-à-dire au moins un) poly-acide carboxylique spécifique de formule générale (I) et un (c'est-à-dire au moins un) imidazole de formule générale (II).

### II.4.a. Poly-acide

Le poly-acide utile pour les besoins de l'invention est un poly-acide carboxylique de formule générale (I) 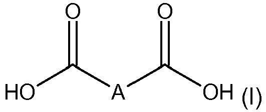 dans laquelle A représente une liaison covalente ou un groupement hydrocarboné comportant au moins 1 atomes de carbone, éventuellement substitué et éventuellement interrompu par un ou plusieurs hétéroatomes.

De préférence dans le poly-acide de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 65 atomes de carbone. Au-dessus de 1800 atomes de carbone, le poly-acide est un agent de réticulation moins performant. Ainsi, A représente de préférence un groupement divalent hydrocarboné comportant de 3 à 65 atomes de carbone, préférentiellement de 5 à 65 atomes de carbone, plus préférentiellement de 8 à 65 atomes de carbone, et encore plus préférentiellement de 10 à 65 atomes de carbone.

Préférentiellement dans le poly-acide de formule générale (I), A peut être un groupement divalent de type aliphatique, ou aromatique ou un groupement comportant au moins une partie aliphatique et une partie aromatique. De préférence, A peut être un groupement divalent de type aliphatique, ou un groupement comportant au moins une partie aliphatique et une partie aromatique. Alternativement, et de préférence également, A peut être un groupement divalent de type aliphatique saturé ou insaturé, par exemple un groupement alkylène.

Le groupement A du poly-acide de formule générale (I) peut être interrompu par au moins un hétéroatome choisi parmi l'oxygène, l'azote et le soufre, de préférence l'oxygène.

Egalement, le groupement A du poly-acide de formule générale (I) peut être substitué par au moins un radical choisi parmi les radicaux alkyle, cycloalkylalkyle, aryle, aralkyle, hydroxyle, alkoxy, amino et carbonyle.

Le poly-acide de formule générale (I) peut comporter plus de deux fonctions acides carboxyliques, dans ce cas, le groupement A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-mêmes substitués par une ou plusieurs fonctions acides carboxyliques.

Selon un mode préférentiel, le radical A ne comporte pas d'autre fonction acide carboxylique, le poly-acide est donc un diacide.

Le taux de poly-acide est préférentiellement compris dans un domaine allant de 0,2 à 100 pce, de préférence de 0,2 à 50 pce, plus préférentiellement de 0,4 à 27 pce, et plus préférentiellement encore de 0,9 à 25 pce. En dessous de 0,2 pce de poly-acide, l'effet de la réticulation n'est pas sensible tandis qu'au-delà de 100 pce de poly-acide, le poly-acide, agent de réticulation, devient majoritaire en poids par rapport à la matrice polymérique.

Les poly-acides utiles pour les besoin de l'invention sont soit disponibles dans le commerce, soit facilement préparés par l'homme de l'art selon des techniques bien connues telles que les voies chimiques décrites par exemple dans le document US 7534917 ainsi que dans les références que ce document cite, ou les voies biologiques, telles que la fermentation décrite dans le document US3843466.

Par exemple, à titre de poly-acides disponibles dans le commerce et utiles aux besoins de l'invention, on peut citer : l'acide oxalique, l'acide succinique, l'acide adipique, l'acide sébacique, l'acide dodécanedioïque, l'acide terephthalique ou encore des polyacides tels que l'acide trimésique ou l'acide 3,4-bis(carboxyméthyl)cyclopentanecarboxylique. Parmi les diacides de plus haute masse, on peut citer le polybutadiene, terminé dicarboxy (Aldrich, CAS 68891-79-2), le poly(acrylonitrile-co-butadiene), terminé dicarboxy (Aldrich, CAS 68891-46-3), le poly(ethylene oxide), 4-bras, terminé acide carboxylique (Aldrich), le poly(ethylene glycol) bis(carboxymethyl) ether (Aldrich, CAS 39927-08-7), le polybutadiène, terminé dicarboxy (Sartomer, « Krasol LBM32 ») ou encore des polyesters commerciaux comme ceux cités dans les documents suivants: JP05062890, CN1247198 ou encore J. Polym. Sci. Part A 1993, 31, 1825.

### II.4.b. Imidazole

L'imidazole utile au système de réticulation selon l'invention est un imidazole de formule générale (II) 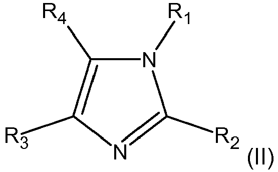 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble avec les atomes de carbone du cycle imidazole auxquels ils se rattachent, un cycle.

De préférence, l'imidazole de formule générale (II) possèdent des groupements tels que :
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Préférentiellement, R₁ représente un groupement choisis parmi les groupements alkyles ayant de 2 à 12 atomes de carbone, ou aralkyles ayant de 7 à 13 atomes de carbone; groupements qui peuvent éventuellement être substitués. Plus préférentiellement, R₁ représente un groupement aralkyle ayant de 7 à 13 atomes de carbone éventuellement substitué et R₂ représente un groupement alkyle ayant de 1 à 12 atomes de carbone. Encore plus préférentiellement, R₁ représente un groupement aralkyle ayant de 7 à 9 atomes de carbone éventuellement substitué et R₂ représente un groupement alkyle ayant de 1 à 4 atomes de carbone.

De préférence, R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Alternativement et préférentiellement également, R₃ et R₄ représentent forment avec les atomes de carbone du cycle imidazole auxquels ils se rattachent, un cycle phényle, cyclohexene, ou cyclopentene.

Pour un bon fonctionnement de l'invention, le taux d'imidazole est préférentiellement compris dans un domaine allant de 0,01 à 4 équivalents molaires, et de préférence de 0,01 à 3 équivalents molaires, par rapport aux fonctions acides carboxyliques présentes sur le poly-acide carboxylique de formule générale (I). En dessous de 0,01 équivalents molaires, on n'observe pas d'effet du coagent imidazole par rapport à la situation où le poly-acide est utilisé seul tandis qu'au-dessus d'une valeur de 4 équivalents molaires, on n'observe pas de bénéfice supplémentaire par rapport à des taux plus faibles. Ainsi, le taux d'imidazole est plus préférentiellement compris dans un domaine allant de 0,01 à 2,5 équivalents molaires, et de préférence de 0,01 à 2 équivalents molaires, et de manière encore plus préférentielle de 0,01 à 1,5 équivalents molaires par rapport aux fonctions acides carboxyliques présentes sur le poly-acide carboxylique de formule générale (I).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

### II.4.c. Poly-acide et imidazole

A l'évidence, et conformément à la définition de l'expression « à base de » pour la présente invention, une composition à base du poly-acide de formule générale (I) et de l'imidazole de formule générale (II) présentés ci-dessus pourrait être une composition dans laquelle ledit poly-acide et ledit imidazole auraient préalablement réagi ensemble pour former un sel entre une ou plusieurs fonctions acides du poly-acide et respectivement un ou plusieurs noyaux imidazoles.

### II.5. Additifs divers

Les compositions de caoutchouc de l'invention peuvent comporter également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants. De préférence, cet agent plastifiant est une résine hydrocarbonée solide (ou résine plastifiante), une huile d'extension (ou huile plastifiante), ou un mélange des deux.

De manière préférentielle, les compositions de l'invention sont dépourvues de système de réticulation autre que celui décrit précédemment, et qui comporte au moins un poly-acide et au moins un imidazole. Dit autrement, le système de réticulation à base d'au moins un poly-acide et au moins un imidazole est préférentiellement le seul système de réticulation dans la composition de l'invention. De préférence, les compositions de l'invention sont dépourvues de système de vulcanisation, ou en contiennent moins de 1 pce, de préférence moins de 0,5 pce et plus préférentiellement moins de 0,2 pce. Ainsi, la composition de l'invention, est préférentiellement dépourvue de soufre moléculaire ou en contient moins de 1 pce, de préférence moins de 0,5 pce et plus préférentiellement moins de 0,2 pce. De même la composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce.

### II.6. Procédé de préparation des compositions de l'invention

Les compositions de caoutchouc peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 90°C et 190°C de préférence de 100°C à 135°C, optionnellement suivie d'une seconde phase de travail mécanique (phase dite "productive") jusqu'à une plus basse température, typiquement inférieure à 110°C, par exemple entre 40°C et 100°C, phase de finition au cours de laquelle peut être incorporé le système de réticulation.

Les compositions sont donc préparées par un procédé incluant une phase (ou étape) de travail ou malaxage thermomécanique au cours de laquelle sont introduits au moins l'élastomère époxydé, la charge renforçante, les additifs éventuels autres que le poly-acide et l'imidazole, optionnellement le poly-acide et l'imidazole, jusqu'à une température maximale comprise entre 90°C et 190°C, préférentiellement comprise dans un domaine allant de 100°C à 135°C, température à laquelle le malaxage est arrêté.

De préférence, le procédé de préparation des compositions l'invention ne comprend aucune phase de malaxage thermomécanique à une température supérieure à 135°C.

Selon un premier mode de réalisation, préférentiel, le poly-acide et l'imidazole sont ajoutés à la composition au cours de la première phase de travail précédemment décrite ; dans ce cas le procédé de préparation des compositions de l'invention peut être un procédé en une seule étape de mélangeage.

De préférence, selon ce premier mode de réalisation, les ingrédients sont introduits dans l'ordre suivant : l'élastomère époxydé, la charge renforçante, les additifs éventuels autres que le poly-acide et l'imidazole, le poly-acide et l'imidazole.

Selon un deuxième mode de réalisation, également préférentiel, si seulement le poly-acide ou l'imidazole est ajouté à la composition lors de la première phase de malaxage, ou encore si aucun des deux ne sont ajoutés lors de cette étape, ils le sont lors d'une étape ultérieure.

Ainsi, selon le deuxième mode de réalisation, la préparation comprend une phase de travail mécanique ultérieure (phase dite "productive"), lors de laquelle le système de réticulation est complété (si seulement le poly-acide ou l'imidazole a été ajouté lors de la première phase de travail) ou incorporé (si aucun du poly-acide ni de l'imidazole n'a été ajouté lors de la première phase de travail) et malaxé, jusqu'à une plus basse température, c'est à dire inférieure à 110°C, préférentiellement entre 40°C et 100°C, température à laquelle le malaxage est arrêté.

On comprend que le deuxième mode de réalisation inclut trois variantes dans le moment de l'ajout des ingrédients du système de réticulation : le cas où le poly-acide est introduit lors de la première phase de travail et l'imidazole est introduit lors de la phase de travail ultérieure, dite productive ; le cas où l'imidazole est introduit lors de la première phase de travail et le poly-acide est introduit lors de la phase de travail ultérieure ; et enfin le cas où le poly-acide et l'imidazole sont introduits lors de la phase de travail dite productive.

La composition ainsi obtenue peut ensuite être calandrée, par exemple sous la forme d'une feuille, d'une plaque notamment pour une caractérisation au laboratoire, ou encore extrudée, par exemple pour former un profilé de caoutchouc, tel que par exemple une bande de roulement, qui peut être utilisé pour la fabrication d'un pneumatique.

### II.7. Utilisation en pneumatique

La composition de caoutchouc obtenue peut par exemple être utilisée dans différentes parties dudit pneumatique, notamment dans le sommet, la zone du bourrelet, la zone du flanc et la bande de roulement (notamment dans la sous-couche de la bande de roulement).

Selon un mode préférentiel de réalisation de l'invention, la composition de caoutchouc précédemment décrite peut être utilisée dans le pneumatique comme une couche élastomère dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc de l'invention peut être utilisée pour former une couche élastomère, disposée dans la région de la zone du bourrelet du pneumatique, radialement entre la nappe carcasse, la tringle et le retournement de la nappe carcasse.

Egalement, la composition de l'invention peut être utilisée dans les nappes du sommet (ceinture de pneumatique) ou dans la zone entre les extrémités des nappes du sommet et la nappe carcasse.

Un autre mode préférentiel de réalisation peut être l'utilisation de la composition de l'invention pour former une couche élastomère disposée dans la zone du flanc du pneumatique.

Alternativement, la composition de l'invention peut avantageusement être utilisée dans la bande roulement du pneumatique.

Les pneumatiques dans lesquels la composition de l'invention est utilisable, sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention. L'invention ainsi que ses avantages seront aisément compris à la lumière de la description et des exemples de réalisation qui suivent.

### III. EXEMPLES DE REALISATION DE L'INVENTION

Les compositions conformes à l'invention (C2 et C3) et la composition témoin (C1) ont été préparées comme indiqué précédemment sont présentées dans le tableau 1 ci-dessous.

**Tableau 1**

| | **C1** | **C2** | **C3** |
|---|---|---|---|
| PEEPOX (1) | 100 | 100 | 100 |
| Silice (2) | 45 | 45 | 45 |
| Poly-acide (3) | 24,7 | 24,7 | 24,7 |
| Imidazole (4) | 1,6 | 1,6 | 1,6 |
| Agent de recouvrement (5) | - | 2,2 | 7,4 |

| | | | |
|---|---|---|---|
| (1) PEEPOX: polyéthylène époxydé « Lotader AX8900 », de la société Arkema comprenant 8% de méthacrylate de glycidyle, 24% d'acrylate de méthyle et 68% d'éthylène ; (2) Silice 160 MP, « Zeosil 1165MP » de la société Rhodia ; (3) Poly(acrylonitrile-co-butadiene), terminé dicarboxy, CAS 68891-46-3, de la société Aldrich, M = 3800 g/mol (4) 1-benzyl-2-méthylimidazole, CAS = 13750-62-4 de la société Sigma-Aldrich ; (5) Diphénylguanidine, « Perkacit DPG » de la société Flexsys. | | | |

Les propriétés des compositions C1 à C3 ont été mesurées comme indiqué précédemment et les résultats sont indiqués dans le tableau 2 ci-dessous.

**Tableau 2**

| | ***C1*** | ***C2*** | ***C3*** |
|---|---|---|---|
| *MSA50 à 23°C (base 100)* | 100 | 100 | 88 |
| *Allongement rupture à 23°C (base 100)* | 100 | 113 | 140 |
| *Contrainte rupture à 23°C (base 100)* | 100 | 113 | 103 |

On note dans les compositions de l'invention une très nette amélioration des propriétés de rupture des compositions, en comparaison à la même composition préparée sans agent de recouvrement. Par ailleurs, dans les compositions, on peut noter que le remplacement du système de vulcanisation classique par un système de réticulation poly-acide et imidazole, tel que prescrit pour l'invention permet de s'affranchir des inconvénients connus des systèmes au soufre.

## Revendications

1. Composition de caoutchouc à base d'au moins un élastomère majoritaire comprenant des fonctions époxydes, de la silice comme charge renforçante majoritaire, un agent de recouvrement de la silice, et un système de réticulation dudit élastomère comprenant un poly-acide carboxylique de formule générale (I) 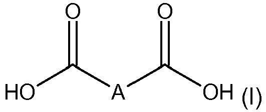 dans laquelle A représente une liaison covalente ou un groupement hydrocarboné comportant au moins 1 atome de carbone, éventuellement substitué et éventuellement interrompu par un ou plusieurs hétéroatomes,
et un imidazole de formule générale (II) 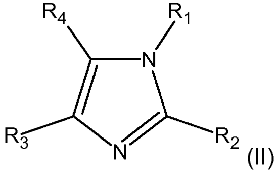 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble, avec les atomes de carbone du cycle imidazole auxquels ils se rattachent, un cycle.

2. Composition selon la revendication 1 dans laquelle l'élastomère majoritaire comprenant des fonctions époxydes présente un taux molaire d'époxydation compris dans un domaine allant de 0,1% à 80%, préférentiellement dans un domaine de 0,1% à 50%, plus préférentiellement dans un domaine de 0,3% à 50%.

3. Composition selon l'une quelconque des revendications précédentes dans laquelle l'élastomère majoritaire comprenant des fonctions époxydes est choisi dans le groupe constitué par les élastomères diéniques époxydés, les élastomères oléfiniques époxydés et les mélanges de ces derniers.

4. Composition selon l'une quelconque des revendications précédentes dans laquelle le taux de poly-acide est compris dans un domaine allant de 0,2 à 100 pce, de préférence de 0,2 à 50 pce.

5. Composition selon l'une quelconque des revendications précédentes dans laquelle le taux total de charge renforçante est compris dans un domaine allant de 5 à 200 pce.

6. Composition selon l'une quelconque des revendications précédentes dans laquelle le taux de silice est compris dans un domaine allant de 5 à 200 pce, de préférence de 10 à 150 pce.

7. Composition selon l'une quelconque des revendications précédentes dans laquelle la charge renforçante comporte du noir de carbone à titre minoritaire de préférence à un taux compris dans un domaine allant de 0,1 à 100 pce, de préférence de 0,1 à 30 pce.

8. Composition selon l'une quelconque des revendications 1 à 6 dans laquelle la silice représente la totalité de la charge renforçante.

9. Composition selon l'une quelconque des revendications précédentes dans laquelle l'agent de recouvrement de la silice est choisi dans le groupe constitué par les silanes hydroxylés ou hydrolysables, les polyols, les polyéthers, les aminés, les polysiloxanes hydroxylés ou hydrolysables, les dérivés guanidiques, les hydroxydes de métaux alcalins ou alcalino-terreux et les mélanges de tels composés.

10. Composition selon la revendication précédente dans laquelle l'agent de recouvrement de la silice est choisi dans le groupe constitué par les aminés, les dérivés guanidiques, les hydroxydes de métaux alcalins ou alcalino-terreux et les mélanges de tels composés.

11. Composition selon la revendication précédente dans laquelle l'agent de recouvrement de la silice est choisi dans le groupe constitué par les amines primaires, les dérivés guanidiques, les hydroxydes de métaux alcalins ou alcalino-terreux et les mélanges de tels composés.

12. Composition selon la revendication précédente dans laquelle l'agent de recouvrement de la silice est la diphénylguanidine ou l'octadécylamine.

13. Composition selon la revendication précédente dans laquelle l'agent de recouvrement de la silice est présent à un taux compris dans un domaine allant de 0,5 à 30 pce, de préférence de 1 à 15 pce.

14. Pneumatique comprenant une composition selon l'une quelconque des revendications 1 à 13.

## Patentansprüche

1. Kautschukzusammensetzung auf Basis von mindestens einem Hauptelastomer mit Epoxidfunktionen, Kieselsäure als hauptsächlichem verstärkenden Füllstoff, einem Mittel zur Bedeckung der Kieselsäure und einem Vernetzungssystem für das Elastomer, umfassend eine Polycarbonsäure der allgemeinen Formel (I), 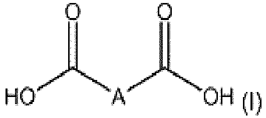 in der A für eine kovalente Bindung oder eine Kohlenwasserstoffgruppe mit mindestens 1 Kohlenstoffatom, die gegebenenfalls substituiert und gegebenenfalls durch ein oder mehrere Heteroatome unterbrochen ist, steht,
und ein Imidazol der allgemeinen Formel (II), 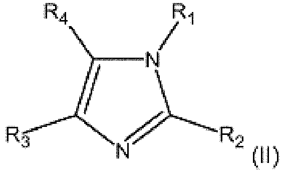 in der
- R₁ für eine Kohlenwasserstoffgruppe oder ein Wasserstoffatom steht,
- R₂ für eine Kohlenwasserstoffgruppe steht,
- R₃ und R₄ unabhängig voneinander für ein Wasserstoffatom oder eine Kohlenwasserstoffgruppe stehen,
- oder R₃ und R₄ auch zusammen mit den Kohlenstoffatomen des Imidazolrings, an den sie gebunden sind, einen Ring bilden.

2. Zusammensetzung nach Anspruch 1, wobei das Hauptelastomer mit Epoxidfunktionen einen molaren Epoxidationsgrad in einem Bereich von 0,1 % bis 80 %, vorzugsweise in einem Bereich von 0,1 % bis 50 %, weiter bevorzugt in einem Bereich von 0,3 % bis 50 %, aufweist.

3. Zusammensetzung nach einem der vorhergehenden Ansprüche, wobei das Hauptelastomer mit Epoxidfunktionen aus der Gruppe bestehend aus epoxidierten Dienelastomeren, epoxidierten olefinischen Elastomeren und Mischungen davon ausgewählt ist.

4. Zusammensetzung nach einem der vorhergehenden Ansprüche, wobei der Gehalt an Polysäure in einem Bereich von 0,2 bis 100 phe und vorzugsweise von 0,2 bis 50 phe liegt.

5. Zusammensetzung nach einem der vorhergehenden Ansprüche, wobei der Gesamtgehalt an verstärkendem Füllstoff in einem Bereich von 5 bis 200 phe liegt.

6. Zusammensetzung nach einem der vorhergehenden Ansprüche, wobei der Gehalt an Kieselsäure in einem Bereich von 5 bis 200 phe und vorzugsweise von 10 bis 150 phe liegt.

7. Zusammensetzung nach einem der vorhergehenden Ansprüche, wobei der verstärkende Füllstoff Ruß in untergeordneter Menge, vorzugsweise in einem Gehalt in einem Bereich von 0,1 bis 100 phe und vorzugsweise von 0,1 bis 30 phe, umfasst.

8. Zusammensetzung nach einem der Ansprüche 1 bis 6, wobei die Kieselsäure den gesamten verstärkenden Füllstoff ausmacht.

9. Zusammensetzung nach einem der vorhergehenden Ansprüche, wobei das Mittel zur Beschichtung der Kieselsäure aus der Gruppe bestehend aus hydroxylgruppenhaltigen oder hydrolysierbaren Silanen, Polyolen, Polyethern, Aminen, hydroxylgruppenhaltigen oder hydrolysierbaren Polysiloxanen, Guanidinderivaten, Alkali- oder Erdalkalimetallhydroxiden und Mischungen derartiger Verbindungen ausgewählt ist.

10. Zusammensetzung nach dem vorhergehenden Anspruch, wobei das Mittel zur Bedeckung der Kieselsäure aus der Gruppe bestehend aus Aminen, Guanidinderivaten, Alkali- oder Erdalkalimetallhydroxiden und Mischungen derartiger Verbindungen ausgewählt ist.

11. Zusammensetzung nach dem vorhergehenden Anspruch, wobei das Mittel zur Bedeckung der Kieselsäure aus der Gruppe bestehend aus primären Aminen, Guanidinderivaten, Alkali- oder Erdalkalimetallhydroxiden und Mischungen derartiger Verbindungen ausgewählt ist.

12. Zusammensetzung nach dem vorhergehenden Anspruch, wobei es sich bei dem Mittel zur Bedeckung der Kieselsäure um Diphenylguanidin oder Octadecylamin handelt.

13. Zusammensetzung nach einem der vorhergehenden Ansprüche, wobei das Mittel zur Bedeckung der Kieselsäure in einem Gehalt in einem Bereich von 0,5 bis 30 phe und vorzugsweise 1 bis 15 phe vorliegt.

14. Reifen, umfassend eine Zusammensetzung nach einem der Ansprüche 1 bis 13.

## Claims

1. Rubber composition based on at least one predominant elastomer comprising epoxide functional groups, silica as predominant reinforcing filler, an agent for covering the silica and a system for crosslinking the said elastomer comprising a polycarboxylic acid of general formula (I): 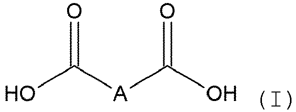 in which A represents a covalent bond or a hydrocarbon group comprising at least 1 carbon atom, optionally substituted and optionally interrupted by one or more heteroatoms,
and an imidazole of general formula (II): 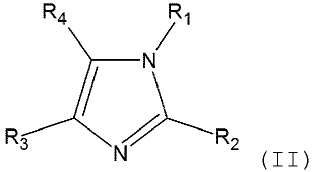 in which:
- R₁ represents a hydrocarbon group or a hydrogen atom,
- R₂ represents a hydrocarbon group,
- R₃ and R₄ represent, independently of each other, a hydrogen atom or a hydrocarbon group,
- or else R₃ and R₄ form, together with the carbon atoms of the imidazole ring to which they are attached, a ring.

2. Composition according to Claim 1, in which the predominant elastomer comprising epoxide functional groups exhibits a molar degree of epoxidation within a range extending from 0.1% to 80%, preferably within a range from 0.1% to 50% and more preferably within a range from 0.3% to 50%.

3. Composition according to any one of the preceding claims, in which the predominant elastomer comprising epoxidized functional groups is selected from the group consisting of epoxidized diene elastomers, epoxidized olefinic elastomers and the mixtures of these.

4. Composition according to any one of the preceding claims, in which the content of polyacid is within a range extending from 0.2 to 100 phr and preferably from 0.2 to 50 phr.

5. Composition according to any one of the preceding claims, in which the total content of reinforcing filler is within a range extending from 5 to 200 phr.

6. Composition according to any one of the preceding claims, in which the silica content is within a range extending from 5 to 200 phr, preferably from 10 to 150 phr.

7. Composition according to any one of the preceding claims, in which the reinforcing filler comprises carbon black in a minor amount, preferably at a content within a range extending from 0.1 to 100 phr, preferably from 0.1 to 30 phr.

8. Composition according to any one of Claims 1 to 6, in which silica represents the reinforcing filler in its entirety.

9. Composition according to any one of the preceding claims, in which the agent for covering the silica is selected from the group consisting of hydroxylated or hydrolysable silanes, polyols, polyethers, amines, hydroxylated or hydrolysable polysiloxanes, guanidine derivatives, alkali metal or alkaline earth metal hydroxides, and the mixtures of such compounds.

10. Composition according to the preceding claim, in which the agent for covering the silica is selected from the group consisting of amines, guanidine derivatives, alkali metal or alkaline earth metal hydroxides and the mixtures of such compounds.

11. Composition according to the preceding claim, in which the agent for covering the silica is selected from the group consisting of primary amines, guanidine derivatives, alkali metal or alkaline earth metal hydroxides and the mixtures of such compounds.

12. Composition according to the preceding claim, in which the agent for covering the silica is diphenylguanidine or octadecylamine.

13. Composition according to the preceding claim, in which the agent for covering the silica is present at a content within a range extending from 0.5 to 30 phr, preferably from 1 to 15 phr.

14. Tyre comprising a composition according to any one of Claims 1 to 13.
